(19) Europäisches Patentamt / European Patent Office / Office européen des brevets

(11) **EP 3 901 562 B1**

(12) **EUROPEAN PATENT SPECIFICATION**

(45) Date of publication and mention of the grant of the patent:
**20.03.2024 Bulletin 2024/12**

(21) Application number: **20171027.4**

(22) Date of filing: **23.04.2020**

(51) International Patent Classification (IPC):
**G01B 5/00** *(2006.01)*        **G01B 21/04** *(2006.01)*
**G05B 19/404** *(2006.01)*

(52) Cooperative Patent Classification (CPC):
**G01B 21/045; G01B 5/0016**

(54) **METHOD FOR THE COMPENSATION OF MEASUREMENT ERRORS OF A COORDINATE MEASURING MACHINE AND A MEASURING MACHINE USING SAID METHOD**

VERFAHREN ZUR KOMPENSATION VON MESSFEHLERN EINER KOORDINATENMESSMASCHINE UND MESSMASCHINE MIT DIESEM VERFAHREN

PROCÉDÉ DE COMPENSATION D'ERREURS DE MESURE D'UNE MACHINE DE MESURE DE COORDONNÉES ET MACHINE DE MESURE DE COORDONNÉES UTILISANT LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.10.2021 Bulletin 2021/43**

(73) Proprietor: **Hexagon Metrology S.p.A.**
**10095 Grugliasco (TO) (IT)**

(72) Inventor: **GUASCO, Giampiero**
**10024 MONCALIERI (TO) (IT)**

(74) Representative: **Studio Torta S.p.A. et al**
**Corso Magenta, 56**
**20123 Milano (IT)**

(56) References cited:
**EP-A1- 3 421 931        US-A1- 2009 271 997**
**US-A1- 2018 106 586**

**Description**

The present invention relates to a method for the compensation of measurement errors of a coordinate measuring machine and a measuring machine using said method.

As is known, coordinate measuring machines comprise members movable along coordinate axes in order to move a probe in a measuring volume. In greater detail, the probe comprises a first body configured to be fixed to a chuck of the measuring machine and a mobile part provided with an elongated stylus having one or more measuring tips configured to interact with the workpiece. The mobile part comprises a second body, from which the stylus extends and which is connected to the first body by elastic elements that allow limited relative displacement following contact of the tip of the stylus with the workpiece. Said relative displacement is detected by a sensor forming part of a detection circuit connected to a control unit of the machine and configured to generate enabling signals for storage of the coordinates of the point of contact between the probe's tip and the workpiece, calculated as a function of the position of the machine axes and the relative displacement or deflection of the probe.

During the operations of scanning of a workpiece, the stylus may be subjected to mechanical vibrations due to the contact forces exchanged with the workpiece and the finite stiffness of the stylus itself. In particular, the vibrations of the stylus affect the relative position of the tip with respect to the second body, causing a deterioration in measurement accuracy.

Documents US 2009/271997, US 2018/106586 and EP 3,421,931 disclose methods for determining spatial coordinates at a multiplicity of measurement points along a contour of objects to be measured by means of coordinate measuring machines.

One method commonly used to limit the negative effects of the mechanical vibrations of the stylus on measurement accuracy is to filter the measurement signals by means of a low-pass filter. This method has the drawback of reducing the measurement bandwidth, reducing the amount of acquirable information in a given time interval and therefore limiting the speed of scanning of the workpiece and/or the density of acquired measurement points.

The object of the present invention is to overcome, at least in part, the drawbacks of the known art.

According to the present invention, a method is provided for the compensation of measurement errors of a measuring machine comprising a mobile unit and a probe configured to be moved by the mobile unit in a measuring volume, wherein the probe comprises a first body configured to be fixed to the mobile unit and a mobile part comprising a second body, which is attached to the first body and is movable with respect to the first body, and a stylus of finite flexural stiffness having at least one tip at one end configured to cooperate with a workpiece; the method comprising the steps of:

- providing a mathematical model of the probe;
- acquiring a first signal related to the acceleration of the first body;
- acquiring a second signal related to the relative displacement between the first and second bodies; and
- estimating a deformation, by compensating for measurement errors due to the mechanical vibrations of the stylus, of the probe by means of a state observer, which uses said mathematical model and receives as input the first signal and the second signal.

Thanks to the present method, it is possible to compensate for measurement errors due to the mechanical vibrations of the stylus, maintaining high measurement bandwidth and thus allowing a high scanning speed and/or high density of acquired measurement points.

Preferably, the method comprises the step of acquiring a third signal related to the acceleration of the second body; the observer receiving the third signal as an input. In particular, the observer is an optimal observer, preferably a Kalman filter.

In this way, it is possible to estimate the deformation of the stylus, i.e. compensate for the measurement error, in an optimal manner.

A further object of the present invention is to provide a measuring machine that mitigates, at least in part, the drawbacks of the known art.

According to the present invention, is provided a measuring machine that comprises:

- a mobile unit;
- a probe configured to be moved by the mobile unit in a measuring volume, wherein the probe comprises a first body configured to be fixed to the mobile unit and a mobile part comprising a second body, which is attached to the first body and is movable with respect to the first body, and a stylus of finite flexural stiffness having at least one tip at one end configured to cooperate with a workpiece;
- a first sensor configured to generate a first signal related to the acceleration of the first body;
- a second sensor configured to generate a second signal related to the relative displacement between the first and second bodies;
- a memory containing a mathematical model of the probe; and
- a control unit configured to estimate a deformation, by compensating for measurement errors due to the mechanical vibrations of the stylus, of the probe by means of a state observer, which uses said mathematical model and receives as input the first signal and the second signal.

Thanks to the measuring machine according to the present invention, it is possible to carry out fast and accurate measurements, compensating for measurement errors due to deformation of the stylus.

In particular, the machine comprises a third sensor configured to generate a third signal related to the acceleration of the second body; the state observer receives the third signal as input.

In particular, it is possible to increase measurement accuracy by estimating the deflection of the stylus by means of an optimal observer, preferably by means of a Kalman filter.

Further characteristics and advantages of the present invention will become apparent from the description that follows of a non-limitative embodiment, with reference to the accompanying figures, wherein:

- Figure 1 is a perspective view of a measuring machine made according to the present invention;
- Figure 2 is a schematic representation of a probe of the measuring machine of Figure 1;
- Figure 3 is a schematic model of the probe of Figure 2;
- Figure 4 is a block diagram of a generic low-pass filter of the model of the probe for narrow-band noise modelling;
- Figure 5 is a block diagram of the system comprising the probe of Figure 2 and a state observer; and
- Figures 6, 7, 8 and 9 are comparative graphs that show the response to a step in the measurement estimated by a state observer in respective operating configurations.

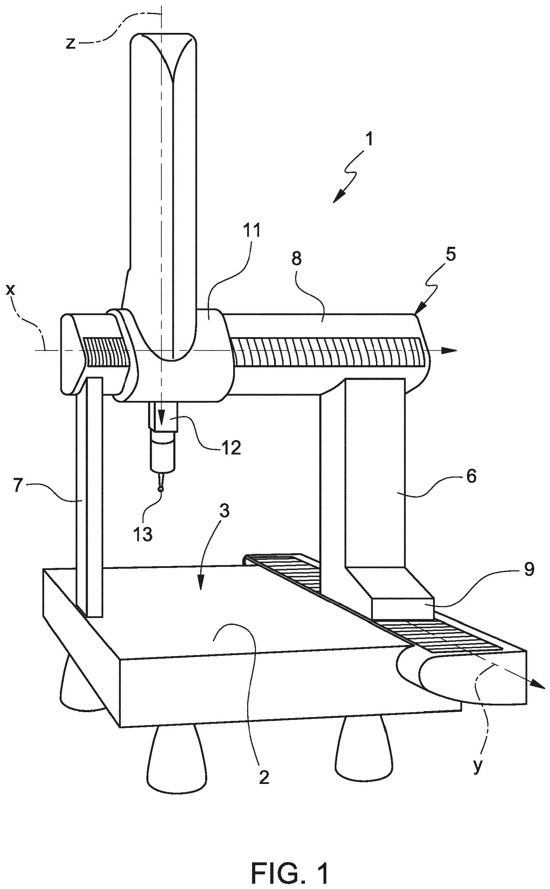

Referring to Figure 1, reference numeral 1 indicates, as a whole, a coordinate-type measuring machine used for taking precision measurements of an object to be measured.

The measuring machine 1 comprises a bench 2 equipped with a flat, horizontal, top surface 3, or reference plane. The measuring machine 1 also comprises a motorised first carriage 5 that slides on the bench 2 along a first horizontal axis (Y-axis) of an X-Y-Z Cartesian reference system of the measuring volume.

The first carriage 5 has a gantry-type structure and comprises two vertical uprights 6, 7 and an upper horizontal crossbeam 8 that extends between the upper ends of the uprights 6, 7.

At the bottom, upright 6 comprises a slide 9 sliding on guides (not shown) parallel to the Y-axis and provided, in a known manner, close to a longitudinal edge of the bench 2.

The crossbeam 8 carries a second carriage 11 configured to slide along the former on guides (not shown) in a direction parallel to a second axis (X-axis) of the reference system.

The second carriage 11 carries a mobile unit 12 having a vertical axis, movable along its axis parallel to a third axis (Z-axis) of the reference system. The mobile unit 12 is configured to carry a probe 13 at the bottom.

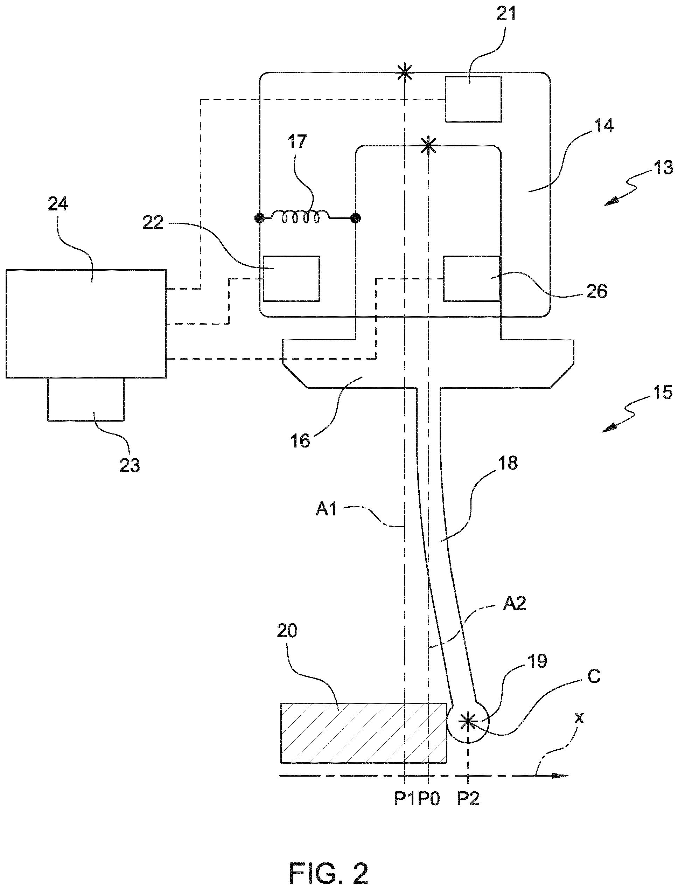

With reference to Figure 2, the probe 13 comprises a body 14 with a vertical axis A1 configured to be fixed to the mobile unit 12 (Figure 1) and a mobile part 15 comprising a body 16 having a vertical axis A2, which is attached to body 14 and is movable with respect to body 14, and a stylus 18 having at least one spherical tip 19 with centre C at one end configured to cooperate with a workpiece 20.

Figure 2 is a one-dimensional schematization, in which body 16 is attached to body 14 by an elastic assembly 17, which is represented by a single spring with stiffness K1 configured to act solely along the X-axis.

In reality, body 16 is attached to body 14 by three elastic elements, each of which is configured to act along a respective X-Y-Z coordinate axis.

The stylus 18 has a finite flexural stiffness, the component of which in the direction of the X-axis, referring to the one-dimensional schematization Figure 2, is indicated by K2.

In reality, the stylus 18 has flexural stiffness both in the direction of the X-axis and in the direction of the Y-axis.

In the case described and illustrated herein, the position of axis A1 of body 14 along the X-axis is indicated by P1. The position of axis A2 of body 16 along the X-axis is indicated by P0. The position of the centre C of the tip 19 along the X-axis is indicated by P2.

In the case of not making contact with the workpiece 20, the spring 17 keeps body 16 in a rest position where P0 coincides with P1 and the deflection of the stylus 18 is null. Therefore, also P2 coincides with P0 and P1.

If the tip 19 is in contact with the workpiece 20, body 16 moves along the X-axis with respect to body 14 and the stylus 18 deflects. In this configuration, P0, P1 and P2 do not coincide.

For the sake of clarity, if the stiffness K2 of the stylus 18 was infinite, the movement of the tip 19 would be coincident with the movement of the body 16, and P0 would coincide with P2.

During the scanning operations of the workpiece 20, the probe 13 is subjected to vibrations caused by the interaction of the probe 13 with the workpiece 20 and by the acceleration to which the probe 13 is subjected. These vibrations are dynamic phenomena such that the position of the tip 19 changes continuously with time.

Furthermore, the measuring machine 1 comprises:

- a sensor 21 configured to acquire a value of the acceleration $\ddot{P1}$ of body 14, and generate a first signal related thereto (this also indicated by P1);
- a sensor 22 configured to acquire a value of the relative displacement P0-P1 between body 14 and body 16, and generate a second signal related thereto (this also indicated by P0-P1) ;
- a memory 23 containing a mathematical model of the probe 13; and
- a control unit 24 configured to estimate the deformation of the probe 13 by means of a state observer 25, which uses said mathematical model and receives as input the first signal $\ddot{P1}$ and the second signal P0-P1.

In the present description, the term state observer means a filter configured to receive signals related to variables measured by a system, use a model of the system, and provide an estimate of the state of the system in real time and in a continuous manner.

According to one embodiment of the present invention, the measuring machine 1 comprises a sensor 26 configured to acquire a value of the acceleration $\ddot{P0}$ of body 16 and generate a third signal related thereto (this also indicated by $\ddot{P0}$ ). In this configuration, the state observer 25 also receives the third signal $\ddot{P0}$ as input.

In particular, sensor 21 is an accelerometer integral with body 14. In accordance with a variant of the present invention, sensor 21 is constituted by a processing unit that acquires a signal related to the position P1 of body 14 and calculates the acceleration $\ddot{P1}$ via double differentiation of said signal. Sensor 26 is an accelerometer integral with body 16. Sensor 22 can be an LVDT associated with the extension of the spring 17.

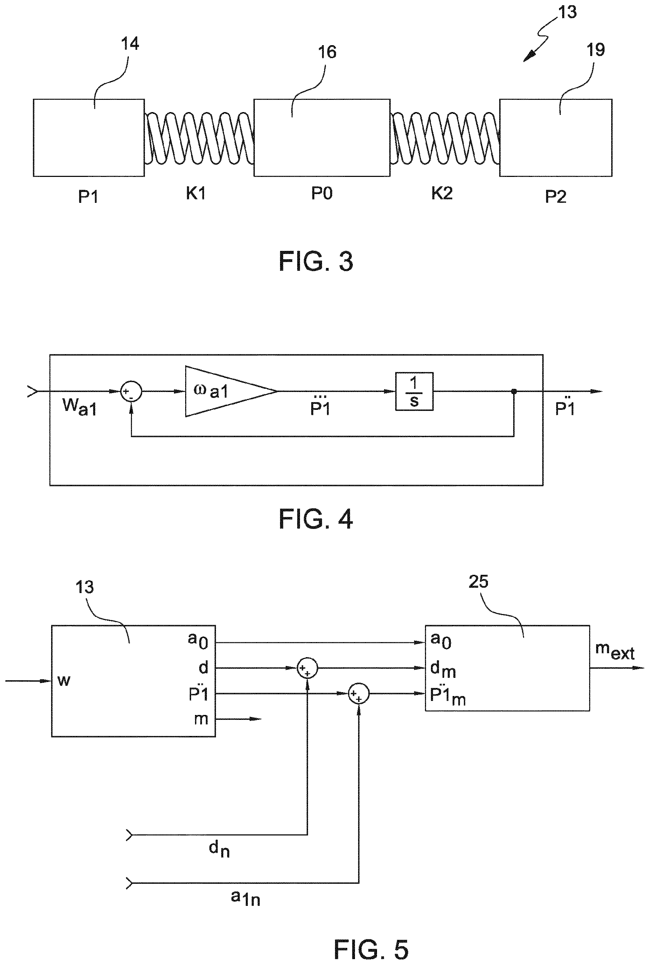

Figure 3 shows a one-dimensional model of the probe 13, used by the state observer 25 to estimate the deformation of the probe 13, wherein body 14 is fixed, body 16 can move along the X-axis, and the stylus 18 (Figure 2) can flex, causing displacement of the position of the centre C of the tip 19 along the X-axis.

The position P0 of body 16 and the velocity $\dot{P0}$ of body 16 represent the state of the model, while the position P1 of body 14 and the position P2 of the tip 19 are the model's inputs. Therefore, the state equation of said model is given by:

$$[1] \qquad M0\ddot{P0} = K1\,(P1 - P0) + K2\,(P2 - P0);$$

wherein M0 represents the mass of body 16.

Advantageously, P0, P1 and P2 are replaced in the state equation by the following quantities:

$$[2] \qquad P0 - P1 \overset{\text{def}}{=} \boldsymbol{d} \quad;$$

$$[3] \qquad P2 - P0 \overset{\text{def}}{=} \boldsymbol{e} \quad;$$

$$[4] \qquad P2 - P1 \overset{\text{def}}{=} \boldsymbol{m} \quad;$$

wherein $\boldsymbol{d}$ is the deflection of the stylus 18, $\boldsymbol{e}$ is the measurement error, and $\boldsymbol{m}$ is the real measurement. The state equation can then be written as:

$$[5] \qquad M0\,\ddot{\boldsymbol{d}} = -(K1 + K2)\,\boldsymbol{d} - M0\,\ddot{P1} + K2\,\boldsymbol{m} \;;$$

wherein $\boldsymbol{m}$ and $\ddot{P1}$ are considered model inputs.

To take into account the noise that affects sensor 26, equation [1] is rewritten as:

$$[6] \qquad a_o = -\frac{K1+K2}{M0}\,d + \frac{K2}{M0}\,m + a_{0n} = \omega_{12}^2\,d + \omega_2^2\,m + a_{0n}$$

wherein $a_{0n}$ is an input of equation [6] and represents the noise that affects sensor 26, and where:

$$[7] \qquad \omega_{12} \stackrel{\text{def}}{=} \sqrt{\frac{K1+K2}{M0}} \ \text{and} \ \omega_2 \stackrel{\text{def}}{=} \sqrt{\frac{K2}{M0}}.$$

By means of a dummy model, $m$, $\ddot{P}1$ and $a_{0n}$ are considered outputs of respective low-pass filters. In other words, the frequency bands of $m$, $\ddot{P}1$ and $a_{0n}$ are limited. These filtered signals are given by:

$$[8] \qquad \dot{m} = \omega_m\,(w_m - m)$$

$$[9] \qquad \ddot{P}1 = \omega_{a1}\,(w_{a1} - \ddot{P}1)$$

$$[10] \qquad \dot{a}_{0n} = \omega_0\,(w_{a0n} - a_{0n})$$

wherein $m$, $\ddot{P}1$ and $a_{0n}$ are the signals filtered by respective low-pass filters, having respective cut-off frequencies $\omega_m$, $\omega_{a1}$ and $\omega_0$, and wherein $w_m$, $w_{a1}$ and $w_{a0n}$ are white noise, which are grouped in a single column vector $w$:

$$[11] \qquad w = \begin{bmatrix} w_m \\ w_{a1} \\ w_{a0n} \end{bmatrix}$$

The meaning of equations [8], [9] and [10] is that each narrow-band noise can be represented by a white noise followed by an appropriate low-pass filter. All the low-pass filters of equations [8], [9] and [10] are first order. For example, the diagram of Figure 4 explains equation [9] in relation to $\ddot{P}1$.

With reference to Figure 5, $d_m$ and $\ddot{P}1_m$ represent the values measured and received as input by the state observer 25. These values are affected by noise and are given by:

$$[12] \qquad \begin{aligned} d_m &= d + d_n; \\ \ddot{P}1_m &= \ddot{P}1 + a_{1n}; \end{aligned}$$

wherein $d_n$ and $a_{1n}$ are white noise and are grouped in a column vector $v$

$$[13] \quad v = \begin{bmatrix} d_n \\ a_{1n} \\ 0 \end{bmatrix}$$

Equations [5, 8, 9, 10, 11] are grouped in a single differential matrix equation for the model.
Equations [6, 12, 13] are grouped in a single matrix equation for the output of the state observer 25. Thus, the model is represented by:

$$[14] \qquad \frac{dx}{dt} = A\,x + B\,w$$

$$y = C\,x + v$$

Where:

- 

$$x = \begin{bmatrix} d \\ \dot{d} \\ m \\ \ddot{P}1 \\ a_{0n} \end{bmatrix};$$

- 

$$y = \begin{bmatrix} d \\ \ddot{P}1 \\ a_0 \end{bmatrix};$$

- 

$$A = \begin{bmatrix} 0 & 1 & 0 & 0 & 0 \\ -\omega_{12}^2 & -z_{12}\,\omega_{12} & \omega_2^2 & -1 & 0 \\ 0 & 0 & -\omega_M & 0 & 0 \\ 0 & 0 & 0 & -\omega_{a1} & 0 \\ 0 & 0 & 0 & 0 & -\omega_{a0} \end{bmatrix};$$

- 

$$B = \begin{bmatrix} 0 & 0 & 0 \\ 0 & 0 & 0 \\ \omega_M & 0 & 0 \\ 0 & \omega_{a1} & 0 \\ 0 & 0 & \omega_{a0} \end{bmatrix};$$

- 

$$C = \begin{bmatrix} 1 & 0 & 0 & 0 & 0 \\ 0 & 0 & 0 & 1 & 0 \\ -\omega_{12}^2 & -z_{12}\,\omega_{12} & \omega_2^2 & 0 & 1 \end{bmatrix};$$

wherein $x$ is the state vector of the model, $y$ is the vector of the outputs measurable by the sensors 21, 22 and 26, and **v** and **w** are white noise having a respective variance. The terms A(2,2) and C(3,2), which represent the natural damping of the model and which have been ignored in equation [5], are added for sake of completeness.

The representation of the above-described model is known as a state variable system. From this representation, it is possible to synthetize the state observer 25, which provides an estimate of the real measurement *m*.

The synthesis of the state observer 25 can be performed in accordance with known theories, for example, as described by D. Simon in "Optimal state estimation: Kalman, H∞, and nonlinear approaches", John Wiley & Sons, Inc., 2006.

According to a preferred, non-limitative embodiment of the present invention, the state observer 25 is an optimal observer, preferably a Kalman filter.

According to a variant of the present invention, the state observer 25 is synthetized via an H∞ technique.

According to a further variant of the present invention, the state observer 25 is a deterministic observer synthetized via the pole-placement technique.

According to a preferred embodiment, the control unit 24 comprises, in a manner in itself known, a first compensation function of the quasi-static component of the measurement error due to deflection of the stylus 18 in contact with the workpiece 20. Furthermore, the control unit 24 comprises, in a manner in itself known, a second compensation function of the quasi-static component of the measurement error due to the quasi-constant acceleration of body 14.

Thus, the quasi-static components of the model state estimated by the state observer 25 are cut off by an action of manual modification to the parameter of the synthetized observer, so as to consider only the dynamic state component estimated by the state observer 25.

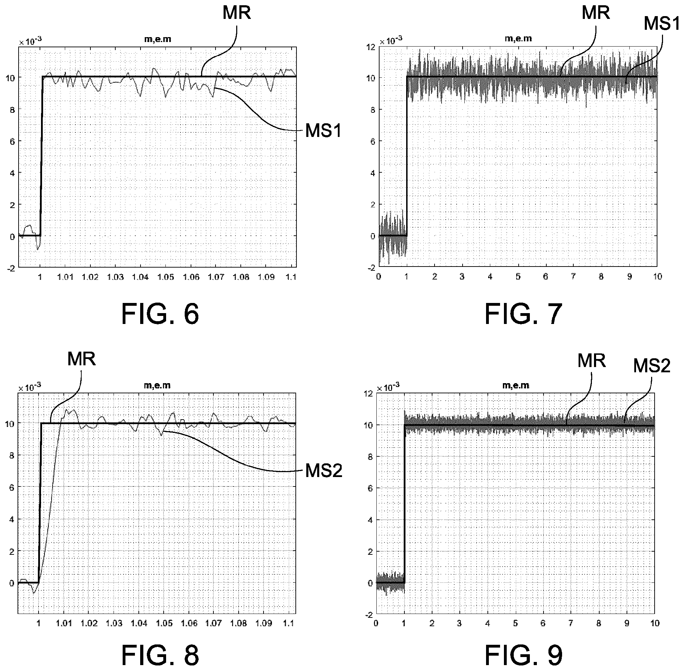

Figures 6-9 show responses in the estimated measurement MS1, MS2 by the state observer 25 to a step MR of 10 $\mu$m in the real measurement $m$. In particular, Figures 7 and 9 are respective enlargements of Figures 6 and 8 in the area of said step.

The variances in noise $v$ and $w$ can be manually changed, so as to differently weigh the signals $\ddot{P1}$ , P0-P1 and $\ddot{P0}$ coming from sensors 21, 22 and 26, respectively.

For example, with reference to Figures 6 and 7, the variance in noise $w_{a0n}$ is set relatively low before Kalman filter synthesis. In this configuration, the response of the estimated measurement MS1 is relatively quick, but subject to a lot of noise.

With reference to Figures 8 and 9, the variance in noise $w_{a0n}$ is set relatively high. In this configuration, the response of the estimated measurement MS2 is relatively slow, but subject to less nose with respect to the response of the estimated measurement MS1.

Considering a 3D model of the probe 13, the mathematical relations are similar to the above-described one-dimensional model, with the difference that some scalar variables become 3D vectors and 3X3 matrices. In particular, with reference to equation [1]:

- $d$, P0, P1 are 3D vectors;
- K1, K2 are 3x3 stifness matrices, as is their sum K1+K2;
- M0 is a 3x3 matrix;
- $\ddot{P0}$ , P0, P1 and P2 are 3D vectors.

One of the more complex aspects is the model for vectors in 3D space, wherein the tip 19 is free to move in two directions, sliding on a surface of the workpiece 20, and is locked in a direction normal to the surface of the workpiece 20. In addition to being complex, this model is not linear. In consequence, the following simplifications are proposed:

- a one-dimensional model is considered in the normal direction n with respect to the surface of the workpiece 20;
- it is assumed that the normal n remains constant or changes slowly with respect the vibration dynamics;
- each 3x3 matrix M is converted into a scalar variable by the matrix multiplication n' * M * n, wherein M is one of the above-listed matrices and n' is the transposed vector of the normal n;
- each coefficient of the model changes slowly as a function of the variation of n and of a constant 3x3 matrix M;
- the vector variables P0, P1, P2, etc. become scalar variables.

More specifically, the model described by equation [5] is transformed into the following three-dimensional model:

$$[15] \qquad \underline{M0}\,\ddot{\underline{d}} = -\left(\underline{K1} + \underline{K2}\right)\underline{d} - \underline{M0}\,\ddot{\underline{P1}} + \underline{K2}\,\boldsymbol{m}$$

wherein $\underline{M0}$, $\underline{K1}$ and $\underline{K2}$, are 3x3 matrices and $\underline{d}$, $\underline{m}$ and $\underline{\ddot{P1}}$ are 3x1 vectors.

The conversion of the 3x3 matrices into scalars takes place according to the following formulae:

$$[16] \qquad \begin{aligned} M0 &= n'\underline{M0}n \\ K1 &= n'\underline{K1}n \\ K2 &= n'\underline{K2}n \end{aligned}$$

The conversion of 3x1 vectors into scalars takes place according to the following formulae:

[17]

$$d = n'\underline{d}$$
$$\ddot{d} = n'\underline{\ddot{d}}$$
$$m = n'\underline{m}$$
$$\ddot{P1} = n'\underline{\ddot{P1}}$$

By applying the transformations of equations [16] and [17] to the three-dimensional model [15], the form of equation [5] is returned to. With respect to the treatment of the one-dimensional model, each of the coefficients M0, K1 and K2 of equations [16] vary with time, as they are obtained via a formula that contains n, and n is a function of time.

In other words, due to the assumptions and simplifications listed above, the 3D model is converted into a one-dimensional model again. Therefore, the above-described method can be applied. The main difference of the model obtained starting from the three-dimensional formulation of the system's state equations lies in the fact that the constants of the model K1, K2 and M0 vary over time. With a simplification justified by the fact that the constants K1, K2 and M0 vary slowly with respect to the dynamics of the system, at each time frame, once the specific values of the system's constants K1, K2 and M0, and consequently of the matrices A, B and C, are assigned, the Kalman filter is synthetized as if the system was invariant over time.

Finally, it is clear that variants can be made regarding the present invention with respect to the described embodiments without departing from the scope of the appended claims.

**Claims**

1. A method for the compensation of measurement errors of a measuring machine (1) comprising a mobile unit (12) and a probe (13) configured to be moved by the mobile unit (12) into a measuring volume, wherein the probe (13) comprises a first body (14) configured to be fixed to the mobile unit (12) and a mobile part comprising a second body (16), which is attached to the first body (14) and is movable with respect to the first body (14), and a stylus (18) of finite flexural stiffness (K2) having at least one tip (19) at one end configured to cooperate with a workpiece (20); the method comprising the steps of:

   - providing a mathematical model of the probe (13);
   - acquiring a first signal ( $\ddot{P1}$ ) related to the acceleration of the first body (14);
   - acquiring a second signal (PO-P1) related to the relative displacement between the first and second bodies (14, 16); and
   - estimating a deformation, by compensating for measurement errors due to the mechanical vibrations of the stylus (18), of the probe (13) by means of a state observer (25), which uses said mathematical model and receives as input the first signal ( $\ddot{P1}$ ) and the second signal (P0-P1).

2. The method as claimed in Claim 1, and comprising the step of acquiring a third signal ( $\ddot{P0}$ ) related to the acceleration of the second body (16); the state observer (25) receiving the third signal ( $\ddot{P0}$ ) as an input.

3. The method as claimed in Claim 2, and comprising the steps of filtering through a low-pass filter the first signal ( $\ddot{P1}$ ) and the second signal (PO-P1); the state observer (25) receiving said filtered signals ( $\ddot{P1}$ , P0-P1) as inputs.

4. The method as claimed in any one of the foregoing Claims, and comprising the step of filtering through a high-pass filter the first signal ( $\ddot{P1}$ ) and the second signal (PO-P1) so as to eliminate the quasi-static component.

5. The method as claimed in any one of the foregoing Claims, wherein the stylus (18) deflection is estimated continuously and in real time.

6. The method as claimed in any one of the foregoing Claims, wherein the state observer (25) is deterministic.

7. The method as claimed in any one of the Claims 1 to 5, wherein the state observer (25) is an optimal observer.

8. The method as claimed in Claim 7, wherein the state observer (25) is a Kalman filter.

9. The method as claimed in any one of the foregoing Claims, wherein the mathematical model of the probe (13) is a one-dimensional model.

10. The method as claimed in any one of the Claims 1 to 7, wherein the mathematical model of the probe (13) is at least a two-dimensional model.

11. A measuring machine comprising:

- a mobile unit (12);
- a probe (13) configured to be moved by the mobile unit (12) in a measuring volume, wherein the probe (13) comprises a first body (14) configured to be fixed to the mobile unit (12) and a mobile part comprising a second body (16), which is attached to the first body (14) and is movable with respect to the first body (14), and a stylus (18) of finite flexural stiffness (K2) having at least one tip (19) at one end configured to cooperate with a workpiece (20);
- a first sensor (21) configured to generate a first signal ( $\ddot{P}1$ ) related to the acceleration of the first body (14);
- a second sensor (22) configured to generate a second signal (PO-P1) related to the relative displacement between the first and second bodies (14, 16);
- a memory (23) containing a mathematical model of the probe (13); and
- a control unit (24) configured to estimate a deformation, by compensating for measurement errors due to the mechanical vibrations of the stylus (18), of the probe (13) by means of a state observer (25), which uses said mathematical model and receives as input the first signal ( $\ddot{P}1$ ) and the second signal (P0-P1).

12. The measuring machine as claimed in Claim 11, and comprising a third sensor (26) configured to generate a third signal ( $\ddot{P}0$ ) related to the acceleration of the second body (16); the state observer (25) receiving the third signal ( $\ddot{P}0$ ) as an input.

**Patentansprüche**

1. Verfahren zur Kompensation von Messfehlern einer Messmaschine (1), die eine mobile Einheit (12) und eine Sonde (13) umfasst, die dafür konfiguriert ist, von der mobilen Einheit (12) in ein Messvolumen bewegt zu werden, wobei die Sonde (13) einen ersten Körper (14), der dafür konfiguriert ist, an der mobilen Einheit (12) befestigt zu werden, und einen mobilen Teil, der einen zweiten Körper (16) umfasst, der an dem ersten Körper (14) befestigt ist und in Bezug auf den ersten Körper (14) beweglich ist, und einen Taststift (18) mit endlicher Biegesteifigkeit (K2) umfasst, der an einem Ende mindestens eine Spitze (19) aufweist, die dafür konfiguriert ist, mit einem Werkstück (20) zusammenzuwirken; wobei das Verfahren die folgenden Schritte umfasst:

- Bereitstellen eines mathematischen Modells der Sonde (13);
- Erfassen eines ersten Signals ( $\ddot{P}1$ ), das sich auf die Beschleunigung des ersten Körpers (14) bezieht;
- Erfassen eines zweiten Signals (PO-P1), das sich auf die relative Verschiebung zwischen dem ersten und dem zweiten Körper (14, 16) bezieht; und
- Schätzen einer Verformung der Sonde (13) durch Kompensation von Messfehlern infolge der mechanischen Schwingungen des Taststifts (18) mittels eines Zustandsbeobachters (25), der das mathematische Modell verwendet und als Eingang das erste Signal ( $\ddot{P}1$ ) und das zweite Signal (PO-P1) empfängt.

2. Verfahren nach Anspruch 1 und umfassend den Schritt des Erfassens eines dritten Signals ( $\ddot{P}0$ ) das sich auf die Beschleunigung des zweiten Körpers (16) bezieht; wobei der Zustandsbeobachter (25) das dritte Signal ( $\ddot{P}0$

) als Eingang empfängt.

3. Verfahren nach Anspruch 2 und umfassend die Schritte des Filterns des ersten Signals ( $\ddot{P1}$ ) und des zweiten Signals (PO-P1) durch ein Tiefpassfilter; wobei der Zustandsbeobachter (25) die gefilterten Signale ( $\ddot{P1}$ , PO-P1) als Eingänge empfängt.

4. Verfahren nach einem der vorhergehenden Ansprüche und umfassend den Schritt des Filterns des ersten Signals ( $\ddot{P1}$ ) und des zweiten Signals (PO-P1) durch ein Hochpassfilter, um die quasistatische Komponente zu eliminieren.

5. Verfahren nach einem der vorhergehenden Ansprüche, wobei die Auslenkung des Taststifts (18) kontinuierlich und in Echtzeit geschätzt wird.

6. Verfahren nach einem der vorhergehenden Ansprüche, wobei der Zustandsbeobachter (25) deterministisch ist.

7. Verfahren nach einem der Ansprüche 1 bis 5, wobei der Zustandsbeobachter (25) ein optimaler Beobachter ist.

8. Verfahren nach Anspruch 7, wobei der Zustandsbeobachter (25) ein Kalman-Filter ist.

9. Verfahren nach einem der vorhergehenden Ansprüche, wobei das mathematische Modell der Sonde (13) ein eindimensionales Modell ist.

10. Verfahren nach einem der Ansprüche 1 bis 7, wobei das mathematische Modell der Sonde (13) mindestens ein zweidimensionales Modell ist.

11. Messmaschine, umfassend:

    - eine mobile Einheit (12);
    - eine Sonde (13), die dafür konfiguriert ist, von der mobilen Einheit (12) in einem Messvolumen bewegt zu werden, wobei die Sonde (13) einen ersten Körper (14), der dafür konfiguriert ist, an der mobilen Einheit (12) befestigt zu werden, und einen mobilen Teil, der einen zweiten Körper (16) umfasst, der an dem ersten Körper (14) befestigt ist und in Bezug auf den ersten Körper (14) beweglich ist, und einen Taststift (18) mit endlicher Biegesteifigkeit (K2) umfasst, der an einem Ende mindestens eine Spitze (19) aufweist, die dafür konfiguriert ist, mit einem Werkstück (20) zusammenzuwirken;
    - einen ersten Sensor (21), der dafür konfiguriert ist, ein erstes Signal ( $\ddot{P1}$ ) zu erzeugen, das sich auf die Beschleunigung des ersten Körpers (14) bezieht;
    - einen zweiten Sensor (22), der dafür konfiguriert ist, ein zweites Signal (PO-P1) zu erzeugen, das sich auf die relative Verschiebung zwischen dem ersten und dem zweiten Körper (14, 16) bezieht;
    - einen Speicher (23), der ein mathematisches Modell der Sonde (13) enthält; und
    - eine Steuereinheit (24), die dafür konfiguriert ist, eine Verformung der Sonde (13) durch Kompensation von Messfehlern infolge der mechanischen Schwingungen des Taststifts (18) mittels eines Zustandsbeobachters (25) zu schätzen, der das mathematische Modell verwendet und als Eingang das erste Signal ( $\ddot{P1}$ ) und das zweite Signal (PO-P1) empfängt.

12. Messmaschine nach Anspruch 11 und umfassend einen dritten Sensor (26), der dafür konfiguriert ist, ein drittes Signal ( $\ddot{P0}$ ) zu erzeugen, das sich auf die Beschleunigung des zweiten Körpers (16) bezieht; wobei der Zustandsbeobachter (25) das dritte Signal ( $\ddot{P0}$ ) als Eingang empfängt.

**Revendications**

1. Procédé pour la compensation d'erreurs de mesure d'une machine de mesure (1) comprenant une unité mobile (12) et une sonde (13) configurée pour être déplacée par l'unité mobile (12) dans un volume de mesure, dans lequel la sonde (13) comprend un premier corps (14) configuré pour être fixé à l'unité mobile (12) et une partie mobile comprenant un second corps (16), qui est fixé au premier corps (14) et est mobile par rapport au premier corps (14), et un stylet (18) d'une rigidité en flexion finie (K2) présentant au moins une pointe (19) à une extrémité configurée pour coopérer avec une pièce à usiner (20) ; le procédé comprenant les étapes consistant à :

    - fournir un modèle mathématique de la sonde (13) ;
    - acquérir un premier signal ($\ddot{P}1$) lié à l'accélération du premier corps (14) ;
    - acquérir un deuxième signal (P0-P1) lié au déplacement relatif entre les premier et second corps (14, 16) ; et
    - estimer une déformation, en compensant des erreurs de mesure dues aux vibrations mécaniques du stylet (18), de la sonde (13) au moyen d'un observateur d'état (25), qui utilise ledit modèle mathématique et qui reçoit en entrée le premier signal ($\ddot{P}1$) et le deuxième signal (PO-P1).

2. Procédé selon la revendication 1, et comprenant l'étape consistant à acquérir un troisième signal ($\ddot{P}0$) lié à l'accélération du second corps (16) ; l'observateur d'état (25) recevant le troisième signal ($\ddot{P}0$) en tant qu'entrée.

3. Procédé selon la revendication 2, et comprenant les étapes consistant à filtrer à travers un filtre passe-bas le premier signal ($\ddot{P}1$) et le deuxième signal (PO-P1) ; l'observateur d'état (25) recevant lesdits signaux filtrés ($\ddot{P}1$, PO-P1) en tant qu'entrées.

4. Procédé selon l'une quelconque des revendications précédentes, et comprenant l'étape de filtrage à travers un filtre passe-haut du premier signal ($\ddot{P}1$) et du deuxième signal (P0-P1) de manière à éliminer la composante quasi-statique.

5. Procédé selon l'une quelconque des revendications précédentes, dans lequel la déviation du stylet (18) est estimée en continu et en temps réel.

6. Procédé selon l'une quelconque des revendications précédentes, dans lequel l'observateur d'état (25) est déterministe.

7. Procédé selon l'une quelconque des revendications 1 à 5, dans lequel l'observateur d'état (25) est un observateur optimal.

8. Procédé selon la revendication 7, dans lequel l'observateur d'état (25) est un filtre de Kalman.

9. Procédé selon l'une quelconque des revendications précédentes, dans lequel le modèle mathématique de la sonde (13) est un modèle unidimensionnel.

10. Procédé selon l'une quelconque des revendications 1 à 7, dans lequel le modèle mathématique de la sonde (13) est au moins un modèle bidimensionnel.

11. Machine de mesure, comprenant :

    - une unité mobile (12) ;
    - une sonde (13) configurée pour être déplacée par l'unité mobile (12) dans un volume de mesure, dans laquelle la sonde (13) comprend un premier corps (14) configuré pour être fixé à l'unité mobile (12) et une partie mobile comprenant un second corps (16), qui est fixé au premier corps (14) et est mobile par rapport au premier corps (14), et un stylet (18) d'une rigidité en flexion finie (K2) présentant au moins une pointe (19) à une extrémité configurée pour coopérer avec une pièce à usiner (20) ;
    - un premier capteur (21) configuré pour générer un premier signal ($\ddot{P}1$) lié à l'accélération du premier corps (14) ;
    - un deuxième capteur (22) configuré pour générer un deuxième signal (PO-P1) lié au déplacement relatif entre les premier et second corps (14, 16) ;
    - une mémoire (23) contenant un modèle mathématique de la sonde (13) ; et
    - une unité de commande (24) configurée pour estimer une déformation, en compensant des erreurs de mesure dues aux vibrations mécaniques du stylet (18), de la sonde (13) au moyen d'un observateur d'état (25), qui utilise ledit modèle mathématique et reçoit en entrée le premier signal ($\ddot{P}1$) et le deuxième signal (PO-P1).

12. Machine de mesure selon la revendication 11, et comprenant un troisième capteur (26) configuré pour générer un troisième signal ($\ddot{P}0$) lié à l'accélération du second corps (16) ; l'observateur d'état (25) recevant le troisième signal ($\ddot{P}0$) en tant qu'entrée.

FIG. 1

EP 3 901 562 B1

FIG. 2

13

FIG. 3

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009271997 A
- US 2018106586 A

- EP 3421931 A

**Non-patent literature cited in the description**

- **D. SIMON.** Optimal state estimation: Kalman, H∞, and nonlinear approaches. John Wiley & Sons, Inc, 2006